(19) **Europäisches Patentamt / European Patent Office / Office européen des brevets**

(11) **EP 4 590 015 A1**

(12) **EUROPEAN PATENT APPLICATION**
published in accordance with Art. 153(4) EPC

(43) Date of publication:
**23.07.2025 Bulletin 2025/30**

(21) Application number: **23872982.6**

(22) Date of filing: **22.09.2023**

(51) International Patent Classification (IPC):
*H04W 24/08* (2009.01)      *H04W 24/10* (2009.01)
*H04L 41/5067* (2022.01)

(52) Cooperative Patent Classification (CPC):
**H04L 41/5067; H04W 24/08; H04W 24/10**

(86) International application number:
**PCT/KR2023/014551**

(87) International publication number:
**WO 2024/071865 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022 KR 20220123251**

(71) Applicant: **Samsung Electronics Co., Ltd.
Suwon-si, Gyeonggi-do 16677 (KR)**

(72) Inventors:
• **JEONG, Seungbeom
  Suwon-si, Gyeonggi-do 16677 (KR)**
• **JUNG, Sangyeob
  Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **METHOD AND DEVICE RELATED TO MEASUREMENT OF QUALITY OF EXPERIENCE IN MOBILE COMMUNICATION SYSTEM**

(57) The present disclosure relates to a 5G or 6G communication system for supporting a higher data transmission rate. A method of user equipment of the present disclosure may comprise the steps of: transmitting, to a base station, information about whether user equipment supports RVQoE measurement; receiving, from the base station, configuration information for the RVQoE measurement; and transmitting, to the base station, a report about the RVQoE measurement.

FIG. 5

EP 4 590 015 A1

## Description

[Technical Field]

The disclosure relates to a method and device for measuring quality of experience (QoE).

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Detailed Description of the Invention]

[Technical Problem]

The disclosure provides a method for providing quality of experience (QoE) measurement for a base station.

[Technical Solution]

According to an embodiment of the disclosure, a method by a UE in a wireless communication system may comprise transmitting information about whether the UE supports a ran-visible quality of experience (RVQoE) measurement to a base station, receiving configuration information for the RVQoE measurement from the base station, and transmitting a report for the RVQoE measurement to the base station.

[Advantageous Effects]

Embodiments of the disclosure propose a method for enhancing quality of experience (QoE) measurement for a base station.

[Brief Description of the Drawings]

FIG. 1 is a view illustrating a structure of a next-generation mobile communication system;
FIG. 2 is a view illustrating a radio access state transition in a next-generation mobile communication system;
FIG. 3 is a flowchart illustrating a procedure for configuring/reporting a signaling-based QoE measurement according to an embodiment of the disclosure;
FIG. 4 is a flowchart illustrating a procedure for configuring/reporting a management-based QoE measurement according to an embodiment of the disclosure;
FIG. 5 is a flowchart illustrating a procedure for configuring and reporting a RAN visible QoE measurement according to an embodiment of the disclosure;
FIG. 6 is a flowchart illustrating a procedure for configuring and reporting an event detection-based RVQoE measurement in a UE APP layer according to an embodiment of the disclosure;
FIG. 7 is a block diagram illustrating a configuration of a UE according to an embodiment; and
FIG. 8 is a block diagram illustrating a configuration of a base station according to an embodiment.

[Mode for Carrying out the Invention]

When determined to make the subject matter of the present invention unclear, the detailed of the known functions or configurations may be skipped.
For the same reasons, some elements may be exaggerated or schematically shown.
It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational operations are performed over the computer or other programmable data processing devices and operate the computer or other programmable data processing devices may provide operations for executing the functions described in connection with a block(s) in each flowchart.
Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

In the disclosure, the base station may be an entity allocating resource to terminal and may be at least one of gNode B, eNode B, Node B, base station (BS), wireless access unit, base station controller, or node over network. The UE may include UE (user equipment), MS (mobile station), cellular phone, smartphone, computer, or multimedia system capable of performing communication functions. Although 5G (NR) or 5G (NR) systems may be described below as an example, the embodiments may be applied to other communication systems having a similar technical background or channel pattern. Further, the embodiments may be modified in such a range as not to significantly depart from the scope of the present invention under the determination by one of ordinary skill in the art and such modifications may be applicable to other communication systems.

Hereinafter, the present invention is described in detail with reference to the accompanying drawings.

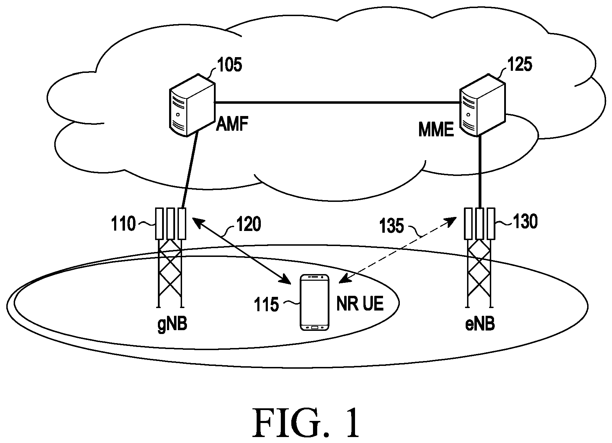

FIG. 1 is a view illustrating a structure of a next-generation mobile communication system.

For convenience of description, in the disclosure, the next-generation mobile communication system is described using a 5G (new radio (NR)) system as an example, but embodiments are not limited thereto, and the next-generation mobile communication system may be, e.g., a beyond-5G system, e.g., a 6G system.

Referring to FIG. 1, a radio access network of a next-generation mobile communication system (new radio (NR)) may include a next-generation base station (New Radio Node B, hereinafter referred to as a gNB or a base station) 110 and an access and mobility management function (AMF) (new radio core network) 105. A new radio user equipment (hereinafter, NR UE or UE) 115 may access an external network through the gNB 110 and the AMF 105.

In FIG. 1, the gNB 110 may correspond to the evolved node B (eNB) of the legacy LTE system. As illustrated in 120 of FIG. 1, the gNB 110 is connected with the NR UE 115 via a radio channel and may provide a superior service to that of the legacy node B (e.g., an eNB). In the next generation mobile communication system, because all user traffic is serviced through a shared channel, a device is required to collect and schedule state information such as the buffer state, the available transmission power state, the channel state, and the like of UEs, and the gNB 110 may be responsible for this. One gNB 110 may control a plurality of cells. In the next-generation mobile communication system, to implement ultra-high data rate transmission as compared with the LTE, a bandwidth higher than the existing maximum bandwidth may be provided, and the orthogonal frequency division multiplexing (hereinafter, OFDM) may be used as the radio access technology, and beamforming technology may be additionally combined. Further, the next-generation mobile communication system may apply adaptive modulation & coding (AMC) that determines a modulation scheme and a channel coding rate in compliance with the channel state of the UE.

The AMF 105 may perform functions such as mobility support, bearer configuration, and QoS configuration. The AMF 105 is a device (entity) that is responsible for various control functions as well as mobility management functions for the UE and may be connected to one or more base stations. Further, the next-generation mobile communication system may be linked with the legacy LTE system. The AMF 105 may be connected to the mobility management entity (MME) 125 through a network interface. The MME 125 may be connected to the eNB 130 which is a legacy base station. The UE 115 supporting LTE-NR dual connectivity may transmit/receive data while maintaining a connection to not only the gNB 110 but also the eNB 140, as illustrated in 135 of FIG. 1.

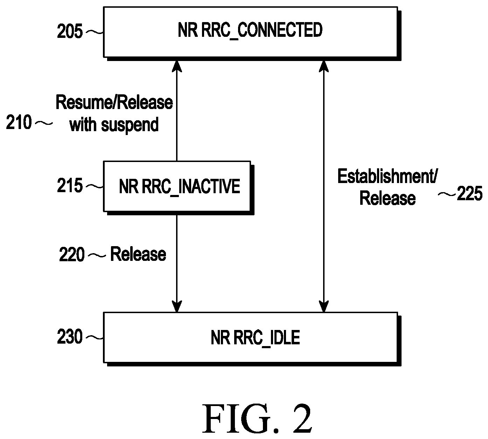

FIG. 2 is a view illustrating a radio access state transition in a next-generation mobile communication system.

Referring to FIG. 2, the next-generation mobile communication system may have three radio access states (radio resource control (RRC) states). The connected mode (RRC_CONNECTED) 205 is a radio access state in which the UE may transmit and receive data. The standby mode (RRC_IDLE) 230 is a radio access state in which the UE monitors whether paging is transmitted to the UE. The two modes are radio access states that are also applicable to legacy LTE systems, and the detailed technology may be the same as that of the legacy LTE systems.

In the next-generation mobile communication system, an inactive (RRC_INACTIVE) radio access state 215 is newly defined. In the radio access state 215, the UE context may be maintained in the base station and the UE, and RAN-based paging may be supported. In the disclosure, the radio access state 215 may also be referred to as an inactive (RRC_INACTIVE) radio access state, an INACTIVE radio access state, an INACTIVE state or an INACTIVE mode.

The new radio access state 215 may have one or more of the following characteristics.

- Cell re-selection mobility;
- CN - NR RAN connection (both C/U-planes) has been established for UE;
- The UE AS context is stored in at least one gNB and the UE;
- Paging is initiated by NR RAN;
- RAN-based notification area is managed by NR RAN;
- NR RAN knows the RAN-based notification area which the UE belongs to;

The new INACTIVE radio access state 215 may transition to a connected mode or a standby mode using a specific procedure. As illustrated in FIG. 210, it may be switched from the INACTIVE mode 215 to the connected mode 205 according to a Resume process, and may be switched from the connected mode 205 to the INACTIVE mode 215 using a release procedure including suspend configuration information. The procedure includes an operation (or a step) in which one or more RRC messages are transmitted and received between the UE and the base station, and may consist of one or more steps. As illustrated in FIG. 220, it is also possible to switch from the INACTIVE mode 215 to the standby mode 230 through a Release procedure after Resume.

Switching between the connected mode 205 and the standby mode 230 may follow the legacy LTE technology. As illustrated in FIG. 225, switching between the modes may be performed through an establishment or release procedure.

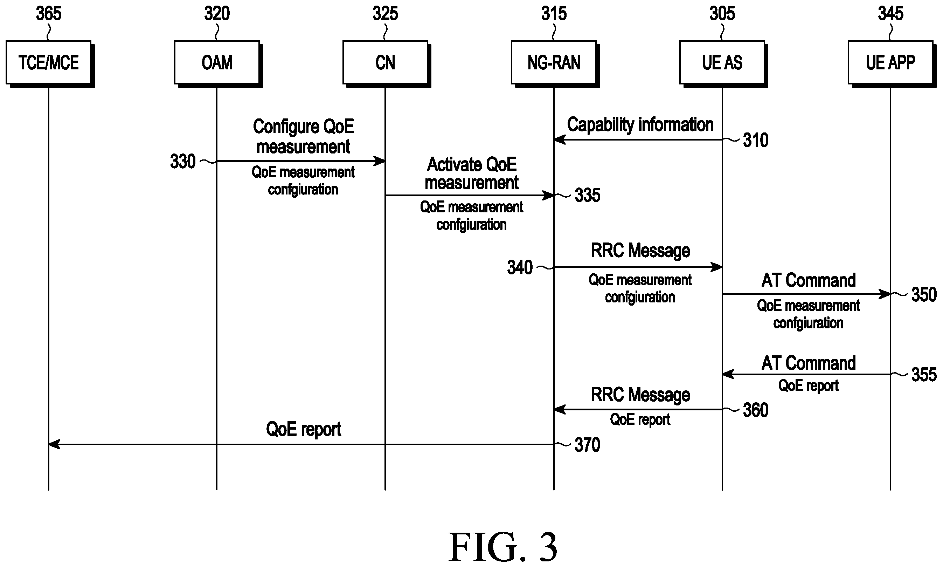

FIG. 3 is a flowchart illustrating a procedure for configuring/reporting a signaling-based QoE measurement according to an embodiment of the disclosure.

In the disclosure, a procedure for configuring/reporting a signaling-based QoE measurement may be referred to as a signaling-based procedure or a signaling-based QoE procedure. The signaling-based procedure may be a procedure in which QoE measurement is configured by an operations administration and maintenance (OAM) and triggered (or activated) by a core network (CN).

The access stratum (AS) 305 of the UE may transmit information indicating whether the UE supports QoE measurement for each service type (e.g., streaming, IP multimedia telephony service for IP multimedia subsystem (IMS) (MTSI), virtual reality (VR), etc.) (e.g., QoE-Streaming-MeasReport, QoE-MTSI-MeasReport, QoE-VR-MeasReport) to the base station (or NG-RAN 315) through the UE capability message (e.g., UECapabilityInformation) (310). In the disclosure, the AS 305 of the UE may be referred to as an AS layer of the UE or an RRC layer of the UE.

Before sending the UE capability message, the base station 315 may send a message (e.g., UECapabilityEnquiry) about a request for the UE capability message to the UE or the UE's AS 305. Further, the UE or the UE's AS 305 may report (or transmit), to the base station 315, information (e.g., ran-VisibleQoE-Streaming-MeasReport, ran-VisibleQoE-VR-MeasReport) indicating whether the UE supports RAN visible QoE measurement for each service type (e.g., streaming, VR). Further, the UE or the UE's AS 305 may report information (e.g., ul-MeasurementReportAppLayer-Seg) indicating whether the UE supports UL RRC segmentation for QoE report messages.

The UE capability message may include ASN.1 information, e.g., as shown in Table 1, and a description of the related parameters may be, e.g., as shown in Table 2.

[Table 1]

```
QoE-Parameters-r17 ::=                      SEQUENCE {
    qoe-Streaming-MeasReport-r17            ENUMERATED {supported}
OPTIONAL,
    qoe-MTSI-MeasReport-r17                 ENUMERATED {supported}
OPTIONAL,
    qoe-VR-MeasReport-r17                   ENUMERATED {supported}
OPTIONAL,
    ran-VisibleQoE-Streaming-MeasReport-r17  ENUMERATED {supported}
OPTIONAL,
    ran-VisibleQoE-VR-MeasReport-r17       ENUMERATED {supported}
OPTIONAL,
    ul-MeasurementReportAppLayer-Seg-r17   ENUMERATED {supported}
OPTIONAL,
    ...
}
```

[Table 2]

### 4.2.20 QoE measurement parameters

| Definitions for parameters | Per | M | FDD-TDD DIFF | FR1-FR2 DIFF |
|---|---|---|---|---|
| qoe-Streaming-MeasReport-r17<br>Indicates whether the UE supports NR QoE Measurement Collection for streaming services, see TS 26.247 [29]. | UE | No | No | No |
| qoe-MTSI-MeasReport-r17<br>Indicates whether the UE supports NR QoE Measurement Collection for MTSI services, see TS 26.114 [30]. | UE | No | No | No |
| qoe-VR-MeasReport-r17<br>Indicates whether the UE supports NR QoE Measurement Collection for VR services, see TS 26.118 [31]. | UE | No | No | No |
| ran-VisibleQoE-Streaming-MeasReport-r17<br>Indicates whether the UE supports RAN visible QoE Measurement Collection for streaming services. | UE | No | No | No |
| ran-VisibleQoE-VR-MeasReport-r17<br>Indicates whether the UE supports RAN visible QoE Measurement Collection for VR services. | UE | No | No | No |
| ul-MeasurementReportAppLayer-Seg-r17<br>Indicates whether the UE supports RRC segmentation of the MeasurementReportAppLayer message in UL, as specified in TS 38.331 [9]. | UE | No | No | No |

Streaming and MTSI were defined as the types of services that may be supported in LTE, and virtual reality (VR) support was further defined in Rel-17, and multimedia broadcast multicast services (MBMS) and extended reality (XR) may be additionally supported in future releases.

The OAM 320 may provide the CN 325 with QoE measurement configuration information (330).

The CN 325 receiving the QoE measurement configuration information may activate the QoE measurement by transmitting the configuration information to the base station 315 (335).

Upon receiving the QoE measurement configuration information, the base station 315 may transfer the QoE measurement configuration information to the UE AS 305 through an RRC message (e.g., an RRCReconfiguration or an RRCResume message) (340). The RRC message may include, e.g., an APPL layerMeasConfig (IE), as shown in Table 3 below, and a description of the related parameters may be, e.g., as shown in Tables 4 and 5.

[Table 3]

```
—          AppLayerMeasConfig

The IE AppLayerMeasConfig indicates configuration of application layer measurements.

                    AppLayerMeasConfig information element

-- ASN1START
-- TAG-APPLAYERMEASCONFIG-START

AppLayerMeasConfig-r17 ::=          SEQUENCE {
    measConfigAppLayerToAddModList-r17   SEQUENCE (SIZE (1..maxNrofAppLayerMeas-r17)) OF MeasConfigAppLayer-r17
OPTIONAL,  -- Need N
    measConfigAppLayerToReleaseList-r17  SEQUENCE (SIZE (1..maxNrofAppLayerMeas-r17)) OF
MeasConfigAppLayerId-r17   OPTIONAL,  -- Need N
    rrc-SegAllowed-r17                  ENUMERATED {enabled}
OPTIONAL,  -- Need R
    ...
}

MeasConfigAppLayer-r17 ::=          SEQUENCE {
    measConfigAppLayerId-r17           MeasConfigAppLayerId-r17,
    measConfigAppLayerContainer-r17    OCTET STRING (SIZE (1..8000))
OPTIONAL,  -- Need N
    serviceType-r17                    ENUMERATED {streaming, mtsi, vr, spare5, spare4, spare3, spare2, spare1}
OPTIONAL,  -- Need M
    pauseReporting                     BOOLEAN
OPTIONAL,  -- Need M
    transmissionOfSessionStartStop     BOOLEAN
OPTIONAL,  -- Need M
    ran-VisibleParameters-r17          SetupRelease {RAN-VisibleParameters-r17}
OPTIONAL,  -- Need M
    ...
}

RAN-VisibleParameters-r17 ::=       SEQUENCE {
    ran-VisiblePeriodicity-r17         ENUMERATED {ms120, ms240, ms480, ms640, ms1024}
OPTIONAL,  -- Need M
    numberOfBufferLevelEntries-r17     INTEGER (1..8)
OPTIONAL,  -- Need R
    reportPlayoutDelayForMediaStartup-r17  BOOLEAN
OPTIONAL,  -- Need M
    ...
}

-- TAG-APPLAYERMEASCONFIG-STOP
-- ASN1STOP
```

[Table 4]

| AppLayerMeasConfig field descriptions |
|---|
| **measConfigAppLayerContainer**<br>The field contains configuration of application layer measurements, see Annex L (normative) in TS 26.247 [68], clause 16.5 in TS 26.114 [69] and TS 26.118 [70]. |
| **pauseReporting**<br>The field indicates whether the transmission of measReportAppLayerContainer is paused or not. |
| **ran-VisibleParameters**<br>The field indicates whether RAN visible application layer measurements shall be reported or not. The field is optionally present when serviceType is set to streaming or vr. Otherwise, it is absent. |
| **rrc-SegAllowed**<br>This field indicates that RRC segmentation of MeasurementReportAppLayer is allowed. It may be present only if the UE supports RRC segmentation of the MeasurementReportAppLayer message in UL. |
| **serviceType**<br>Indicates the type of application layer measurement. Value streaming indicates Quality of Experience Measurement Collection for streaming services (see TS 26.247 [68]), value mtsi indicates Quality of Experience Measurement Collection for MTSI (see TS 26.114 [69]), value vr indicates Quality of Experience Measurement Collection for VR service (see TS 26.118 [70]). The network always configures serviceType when application layer measurements are initially configured and at fullConfig. |
| **transmissionOfSessionStartStop**<br>The field indicates whether the UE shall transmit indications when sessions in the application layer start and stop. The UE transmits a session start indication upon configuration of this field if a session already has started in the application layer. |

[Table 5]

| RAN-VisibleParameters field descriptions |
| --- |
| numberOfBufferLevelEntries<br>The field contains the maximum number of buffer level entries that can be reported for RAN visible application layer measurements. |
| ran-VisiblePeriodicity<br>The field indicates the periodicity of RAN visible reporting. Value ms120 indicates 120 ms, value ms240 indicates 240 ms and so on. |
| reportPlayoutDelayForMediaStartup<br>The field indicates whether the UE shall report Playout Delay for Media Startup for RAN visible application layer measurements. |

The operation of the UE AS 505 receiving the same may be, e.g., as described in Table 6 below.

[Table 6]

---

### 5.3.5.13d    Application layer measurement configuration

The UE shall:

1> if *measConfigAppLayerToReleaseList* is included in *appLayerMeasConfig* within *RRCReconfiguration* or *RRCResume*:

  2> for each *measConfigAppLayerId* value included in the *measConfigAppLayerToReleaseList*:

    3> forward the *measConfigAppLayerId* and inform upper layers about the release of the application layer measurement configuration including any RAN visible application layer measurement configuration;

    3> discard any application layer measurement report received from upper layers;

    3> consider itself not to be configured to send application layer measurement report for the *measConfigAppLayerId*.

1> if *measConfigAppLayerToAddModList* is included in *appLayerMeasConfig* within *RRCReconfiguration* or *RRCResume*:

  2> for each *measConfigAppLayerId* value included in the *measConfigAppLayerToAddModList*:

    3> if *measConfigAppLayerContainer* is included for the corresponding *MeasConfigAppLayer* configuration:

      4> forward the *measConfigAppLayerContainer*, the *measConfigAppLayerId* and the *serviceType* to upper layers considering the *serviceType*;

    3> consider itself to be configured to send application layer measurement report for the *measConfigAppLayerId* in accordance with 5.7.16;

    3> forward the *transmissionOfSessionStartStop*, if configured, and *measConfigAppLayerId* to upper layers considering the *serviceType*;

    3> if *ran-VisibleParameters* is set to setup and the parameters have been received:

      4> forward the *measConfigAppLayerId*, the *ran-VisiblePeriodicity*, if configured, the *numberOfBufferLevelEntries*, if configured, and the *reportPlayoutDelayForMediaStartup*, if configured, to upper layers considering the *serviceType*;

---

> 3> else if *ran-VisibleParameters* is set to release:
>
>> 4> forward the *measConfigAppLayerId* and inform upper layers about the release of the RAN visible application layer measurement configuration:
>
> 3> if *pauseReporting* is set to *true*:
>
>> 4> if at least one segment, but not all segments, of a segmented *MeasurementReportAppLayer* message containing an application layer measurement report associated with the *measConfigAppLayerId* has been submitted to lower layers for transmission:
>>
>>> 5> submit the remaining segments of the *MeasurementReportAppLayer* message to lower layers for transmission:
>>
>> 4> suspend submitting application layer measurement report containers to lower layers for the application layer measurement configuration associated with the *measConfigAppLayerId*:
>>
>> 4> store any previously or subsequently received application layer measurement report containers associated with the *measConfigAppLayerId* for which no segment, or full message, has been submitted to lower layers for transmission:
>
> 3> else if *pauseReporting* is set to *false* and if transmission of application layer measurement report containers has previously been suspended for the application layer measurement configuration associated with the *measConfigAppLayerId*:
>
>> 4> submit stored application layer measurement report containers to lower layers, if any, for the application layer measurements configuration associated with the *measConfigAppLayerId*:
>>
>> 4> resume submitting application layer measurement report containers to lower layers for the application layer measurement configuration associated with the *measConfigAppLayerId*,
>
> NOTE 1: The UE may discard reports when the memory reserved for storing application layer measurement reports becomes full.
>
> NOTE 2: The transmission of RAN visible application layer measurement reports is not paused when *pauseReporting* is set to *true*.

As described above, in the case of the QoE measurement configuration included in the measConfigAppLayer-ToAddModList, the AS layer 305 of the UE may transfer the configuration information to the UE's upper layer or application layer (UE APP) 345 through an AT Command (350). For the QoE measurement configuration included in the measConfigAppLayerToAddReleaseList, the AS layer 305 of the UE may send an AT Command to erase the stored configuration information to the APP 345 of the UE.

The UE APP 345 may perform QoE measurement according to the received configuration information. Further, the UE APP 345 may report the result of the measurement to the UE AS 305 through an AT command according to the configuration information (355). For example, the UE APP 345 may generate a QoE report including the result of the measurement and report it to the UE AS 305 through an AT command.

The UE AS 305 receiving the same may report the measurement result to the base station 315 through an RRC message (e.g., a MeasurementReportAppLayer message) (360). For example, the UE AS 305 may transmit an RRC message including the QoE report to the base station 315. For reporting the QoE measurement result, SRB4 may be used.

The MeasurementReportAppLayer message may include ASN.1 information as shown in Table 7, and a description of the related parameters may be as shown in Table 8.

[Table 7]

– *MeasurementReportAppLayer*

The *MeasurementReportAppLayer* message is used for sending application layer measurement report.

 Signalling radio bearer: SRB4

 RLC-SAP: AM

 Logical channel: DCCH

 Direction: UE to Network

**MeasurementReportAppLayer message**

```
-- ASN1START
-- TAG-MEASUREMENTREPORTAPPLAYER-START

MeasurementReportAppLayer-r17 ::=      SEQUENCE {
    criticalExtensions                 CHOICE {
        measurementReportAppLayer-r17      MeasurementReportAppLayer-r17-IEs,
        criticalExtensionsFuture           SEQUENCE {}
    }
}

MeasurementReportAppLayer-r17-IEs ::=  SEQUENCE {
    measurementReportAppLayerList-r17      MeasurementReportAppLayerList-r17,
    lateNonCriticalExtension               OCTET STRING
OPTIONAL,
    nonCriticalExtension                   SEQUENCE {}
OPTIONAL
}

MeasurementReportAppLayerList-r17 ::= SEQUENCE (SIZE (1..maxNrofAppLayerMeas-r17)) OF MeasReportAppLayer-r17

MeasReportAppLayer-r17 ::=          SEQUENCE {
    measConfigAppLayerId-r17               MeasConfigAppLayerId-r17,
    measReportAppLayerContainer-r17        OCTET STRING
OPTIONAL,
    appLayerSessionStatus-r17              ENUMERATED (started, stopped)
OPTIONAL,
    ran-VisibleMeasurements-r17            RAN-VisibleMeasurements-r17
OPTIONAL
}

RAN-VisibleMeasurements-r17 ::=        SEQUENCE {
    appLayerBufferLevelList-r17            SEQUENCE (SIZE (1..8)) OF AppLayerBufferLevel-r17
OPTIONAL,
    playoutDelayForMediaStartup-r17        INTEGER (0..30000)
OPTIONAL,
    pdu-SessionIdList-r17                  SEQUENCE (SIZE (1..maxNrofPDU-Sessions-r17)) OF PDU-SessionID
OPTIONAL,
    ...
}

AppLayerBufferLevel-r17 ::= INTEGER (0..30000)

-- TAG-MEASUREMENTREPORTAPPLAYER-STOP
-- ASN1STOP
```

[Table 8]

| MeasurementReportAppLayer field descriptions |
|---|
| **appLayerBufferLevelList** <br> The field indicates a list of application layer buffer levels, and each *AppLayerBufferLevel* indicates the application layer buffer level in ms. Value 0 corresponds to 0ms, value 1 corresponds to 10ms, value 2 corresponds to 20 ms and so on. If the buffer level is larger than the maximum value of 30000 (5 minutes), the UE reports 30000. |
| **appLayerSessionStatus** <br> Indicates that an application layer measurement session in the application layer starts or ends. |
| **playoutDelayForMediaStartup** <br> Indicates the application layer playout delay for media start-up in ms. Value 0 corresponds to 0ms, value 1 corresponds to 1ms, value 2 corresponds to 2 ms and so on. If the playout delay for media start-up is larger than the maximum value of 30000ms, the UE reports 30000. |
| **measReportAppLayerContainer** <br> The field contains application layer measurement report, see Annex L (normative) in TS 26.247 [68], clause 16.5 in TS 26.114 [69] and TS 26.118 [70]. |
| **pdu-SessionIdList** <br> Contains the identity of the PDU session, or the identities of the PDU sessions, used for application data flows subject to the RAN visible application layer measurements. |

The detailed procedure of the UE AS 305 reporting the same may be as described in Table 9 below.

[Table 9]

## 5.7.16 Application layer measurement reporting

### 5.7.16.1 General

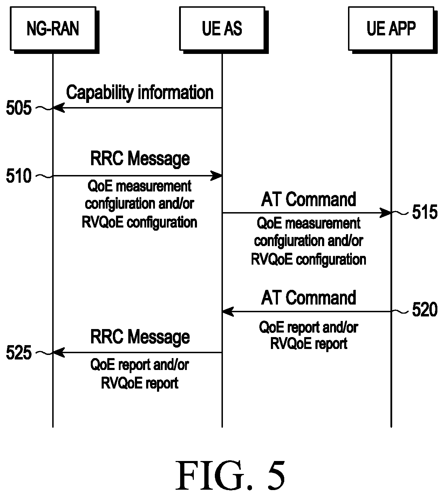

**Figure 5.7.16.1-1: Application layer measurement reporting**

The purpose of this procedure is to send application layer measurement reports to the network.

### 5.7.16.2 Initiation

A UE capable of application layer measurement reporting in RRC_CONNECTED may initiate the procedure when configured with application layer measurement, i.e. when *appLayerMeasConfig* and SRB4 have been configured by the network.

Upon initiating the procedure, the UE shall:

> 1> for each *measConfigAppLayerId*:

>> 2> if the UE AS has received application layer measurement report from upper layers which has not been transmitted; and

>> 2> if the application layer measurement reporting has not been suspended for the *measConfigAppLayerId* associated with the application layer measurement report according to clause 5.3.5.13d:

>>> 3> set the *measReportAppLayerContainer* in the *MeasurementReportAppLayer* message to the received value in the application layer measurement report:

>> 2> set the *measConfigAppLayerId* in the *MeasurementReportAppLayer* message to the value of the *measConfigAppLayerId* received together with application layer measurement report information:

>> 2> if session start or stop information has been received from upper layers for the *measConfigAppLayerId*:

>>> 3> set the *appLayerSessionStatus* to the received value of the application layer measurement information:

>> 2> if RAN visible application layer measurement report has been received from upper layers:

>>> 3> for each *appLayerBufferLevel* value in the received RAN visible application layer measurement report:

>>>> 4> set the *appLayerBufferLevel* values in the *appLayerBufferLevelList* to the buffer level values received from the upper layer in the order with the first *appLayerBufferLevel* value set to the newest received buffer level value, the second *appLayerBufferLevel* value set to the second newest received buffer level value, and so on until all the buffer level values received from the upper layer have been assigned or the maximum number of values have been set according to *appLayerBufferLevel*, if configured:

```
3> set the playoutDelayForMediaStartup to the received value in the RAN visible application layer measurement report,
   if any;

3> for each PDU session ID value indicated in the received RAN visible application layer measurement report, if any:

   4> set the PDU-SessionID field in the pdu-SessionIdList to the indicated PDU session ID value;

2> if the encoded RRC message is larger than the maximum supported size of one PDCP SDU specified in TS 38.323 [5]:

   3> if the RRC message segmentation is enabled based on the field rrc-SegAllowed received in appLayerMeasConfig:

      4> initiate the UL message segment transfer procedure as specified in clause 5.7.7;

   3> else:

      4> discard the RRC message;

2> else:

   3> submit the MeasurementReportAppLayer message to lower layers for transmission upon which the procedure ends.
```

The base station 315 may transfer the measurement result report to a final server (e.g., a trace collection entity (TCE) and/or measurement collection entity (MCE) 365) that collects the measurement report (370). For example, the base station 315 may transmit the QoE report to a set final destination (e.g., TCE or MCE).

In the disclosure, operations of the UE AS and the UE APP may be represented as operations of the UE.

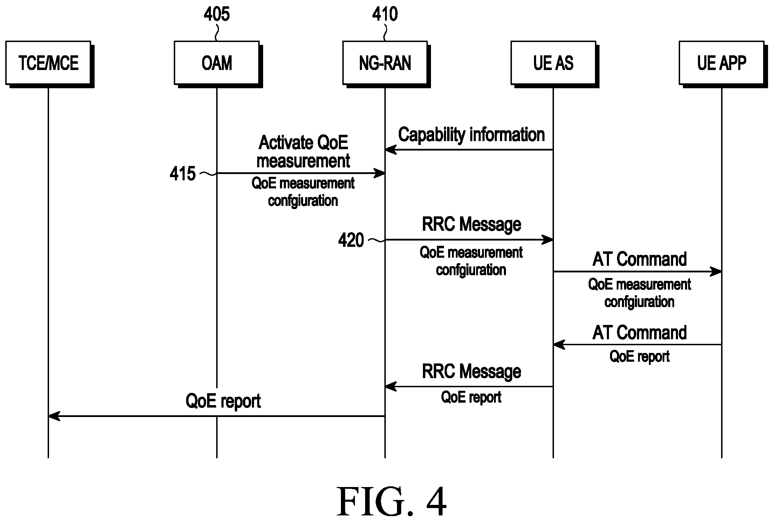

FIG. 4 is a flowchart illustrating a procedure for configuring/reporting a management-based QoE measurement according to an embodiment of the disclosure.

In the disclosure, a procedure for configuring/reporting management-based QoE measurement may be referred to as a management-based QoE configuring/reporting procedure, a management-based QoE measurement procedure, or a management-based procedure. The management-based procedure may be a procedure in which QoE measurement is configured by the OAM and triggered (or activated) by the OAM. As such, in the management-based procedure, the QoE measurement is triggered (or activated) by the OAM, unlike signaling-based procedures (e.g., signaling-based procedures of FIG. 3) in which the QoE measurement is triggered (or activated) by the CN.

Meanwhile, the management-based QoE configuring/reporting procedure (management-based procedure) is quite similar to the above signaling-based procedure (e.g., signaling-based procedure of FIG. 3), except that QoE measurement is triggered (or activated) by a different entity. Therefore, in the disclosure, only differences in the management-based method are described below, and other procedures (operations) and descriptions may be the same as those in FIG. 3. Therefore, the operations and the related descriptions omitted from FIG. 4 may be understood with reference to the corresponding operations and the related descriptions of FIG. 3.

Referring to FIG. 4, in the management-based method (management-based procedure), the OAM 405 may activate the QoE measurement by directly sending the QoE measurement configuration to the base station 410 without passing through the CN.

The base station 410 receiving the same may discover one or more UEs that meet various conditions (e.g., area scope, application layer capability, service type). Further, the base station 410 may transfer the QoE measurement configuration to each of the UEs through an RRC message (e.g., an RRCReconfiguration message or an RRCResume message). (420).

Further, the other procedures (operations) and related information/message forms may be the same as the descriptions of the corresponding procedures (operations) and related information/message forms of FIG. 3 (signaling-based method). For example, the operation in which the UE AS of FIG. 4 transmits support capability information for QoE measurement to the base station is the same as operation 310 of FIG. 3, so that the description of operation 310 may be referred to. For example, the operation in which the UE AS of FIG. 4 transfers the QoE configuration information to the UE APP through the AT command is the same as operation 350 of FIG. 3, so that the description of operation 350 may be referred to. For example, the operation in which the UE APP of FIG. 4 performs QoE measurement according to QoE configuration information and reports the result of the measurement to the UE AS through AT command is the same as operation 355 of FIG. 3, so that the description of operation 355 may be referred to. For example, the operation in which the UE AS of FIG. 4 reports the measurement result to the base station through the RRC message is the same as operation 360 of FIG. 3, so that the description of operation 360 may be referred to. For example, the operation in which the base station transfers the measurement result to the final server is the same as operation 370 of FIG. 3, so that the description of operation 370 may be referred to.

FIG. 5 is a flowchart illustrating a procedure for configuring and reporting a RAN visible QoE measurement according to an embodiment of the disclosure.

In the case of FIGS. 3 and 4, the QoE measurement is configured by the OAM, and the QoE measurement report generated accordingly is collected by the TCE/MCE, so that the operator may use the QoE measurement report for network optimization. In this case, when the UE transmits a report on the OAM-based QoE measurement to the base station and the base station receives it, the base station may not read or understand the measurement report. The measurement report generated by the UE's application layer is included in the measurementReportAppLayerContainer in the MeasurementReportAppLayer message, but it may not be read or understood by the base station or the base station's RRC layer because it is stored in the form of OCTEC STRING.

To solve this problem, RAN visible QoE (RVQoE) measurement was defined and introduced by the 3GPP in order for base stations to read QoE measurement reports and utilize them for network optimization such as radio resource management. Unlike the above-described signaling-based QoE measurement method (signaling-based QoE measurement method) of FIG. 3 and the management-based QoE measurement method (management-based QoE measurement method) of FIG. 3, in the RVQoE measurement method (RVQoE measurement procedure), QoE measurement (RVQoE measurement) may be configured and/or triggered (or activated) by the base station, and the QoE measurement report (RVQoE measurement report) may be transferred to the base station and used by the base station. In an embodiment, the RVQoE measurement may be defined to be limited to a specific service type (e.g., streaming, VR). In the disclosure, RVQoE measurement may also be referred to as RAN visible application layer measurement.

Hereinafter, a procedure for configuring and reporting an RVQoE measurement is described with reference to FIG. 5.

Referring to FIG. 5, first, the UE (or, UE AS) may report whether RVQoE measurement is supported for each service type (e.g., streaming, VR) to the base station (e.g., NG-RAN) (505). In this case, a UECapabilityInformation message may be used. For example, the UE may include or configure a parameter (e.g., the ran-VisibleQoE-Streaming-MeasReport parameter) indicating whether the UE supports RVQoE measurement for streaming services and a parameter (e.g., the ran-VisibleQoE-VR-MeasReport parameter) indicating whether the UE supports RVQoE measurement for VR services in the UECapability Information message. For example, the UE may report, to the base station, that RVQoE measurement for streaming services is supported by including (presenting) the ran-VisibleQoE-Streaming-MeasReport parameter in the UECapabilityInformation message or setting the value of the ran-VisibleQoE-Streaming-MeasReport parameter to a specific value ('supported' value). For example, the UE may report, to the base station, that RVQoE measurement for VR services is supported by including (presenting) the ran-VisibleQoE-VR-MeasReport parameter in the UECapabilityInformation message or setting the value of the ran-VisibleQoE-VR-MeasReport parameter to a specific value ('supported' value).

Accordingly, the base station may determine whether the UE supports RVQoE measurement for each service type, and accordingly, the base station may generate and transmit the RVQoE measurement configuration (RVQoE measurement configuration information) to the UE (510). As an embodiment, the RVQoE measurement configuration may be transferred along with the OAM-based QoE measurement configuration (e.g., the QoE measurement configuration for the signaling-based QoE measurement of FIG. 3 and/or the QoE measurement configuration for the management-based QoE measurement of FIG. 4). Alternatively, the RVQoE measurement configuration may be transferred separately from the OAM-based QoE measurement configuration. As an embodiment, the RVQoE measurement configuration may be included in the RRCReconfiguration or the RRCResume message.

The base station may instruct the UE to set up or release the RVQoE measurement, e.g., through setting up or releasing the ran-VisibleParameters parameter in the AppLayerMeasConfig IE. The parameter may include a RAN-VisibleParameters IE, and through this, the base station may provide some or all of the following parameters to the UE.

- RVQoE measurement reporting period (ran-VisiblePeriodicity): A parameter that indicates the period of reporting for RVQoE measurement. The UE AS or the UE APP may transmit the RVQoE measurement report every period.
- Maximum number of reportable buffer levels (numberOfBufferLevelEntries): A parameter that designates the maximum number of buffer level entries that may be reported for RVQoE measurement. The UE AS or the UE APP may include a plurality of buffer levels when reporting the RVQoE measurement, and may include a number of buffer levels which is a number equal to or smaller than the set value of the parameter.
- Whether to report playout delay on media startup (reportPlayoutDelayForMediaStartup): A parameter that indicates whether the UE should report the playout delay for media startup for RVQoE measurement. If the value of the parameter is indicated as true, the UE AS or UE APP may include and transmit the playout delay in the RVQoE report at the start of the media. If the value of the parameter is indicated as false, the UE may not include the playout delay in the RVQoE report at the start of the media.

The AS layer of the UE may transfer the configuration information to the APP layer of the UE (515). As an embodiment, the RVQoE measurement configuration may be transferred together with the OAM-based QoE measurement configuration. Alternatively, the RVQoE measurement configuration may be transferred separately from the OAM-based QoE measurement configuration.

The APP of the UE may perform QoE measurement based on the RVQoE measurement configuration information to generate an RVQoE measurement report and transmit the same to the AS layer of the UE (520). As an embodiment, the RVQoE measurement report may be transferred together with the OAM-based QoE measurement report. Alternatively, the RVQoE measurement report may be transferred separately from the OAM-based QoE measurement report.

The AS layer of the UE receiving the same may transfer the same to the base station (525). As an embodiment, the RVQoE measurement report may be transferred along with the OAM-based QoE measurement report (e.g., the QoE measurement report for the signaling-based QoE measurement of FIG. 3 and/or the QoE measurement report for the management-based QoE measurement of FIG. 4). Alternatively, the RVQoE measurement report may be transferred separately from the OAM-based QoE measurement report. In operation 525, the RVQoE measurement report may be transmitted through the RAN-VisibleMeasurements IE in the MeasurementReportAppLayer message, and the IE may include some or all of the following parameters.

- Buffer level list of App layer (appLayerBufferLevelList): A parameter containing the list of application layer buffer level(s). This may include one or more buffer levels measured by the UE APP. The number of buffer levels included in the parameter may be limited by numberOfBufferLevelEntries in the RVQoE configuration (RVQoE measurement configuration).
- Playout delay (playoutDelayForMediaStartup): This may indicate the playout delay in ms at the start of the media. The UE may include this parameter when reportPlayoutDelayForMediaStartup is set to true in the RVQoE configuration.
- PDU session ID list (pdu-SessionIdList): This may indicate the PDU session(s) used in the application data flow, which is the target of RVQoE measurement. Through this, the base station may know which PDU session(s) the RVQoE value(s) (e.g., buffer level and/or playout delay) has been measured for, and accordingly, optimize resource allocation and scheduling for the corresponding PDU session(s).

The base station may read the RVQoE report (RVQoE measurement report) and utilize it to perform network optimization. For example, the base station may enhance the QoE of the UE by allocating a larger amount of radio resources to the UE experiencing poor QoE for a specific service.

Meanwhile, as an example of RVQoE measurement report, the UE APP may measure the buffer level multiple times and transfer the result (i.e., a plurality of buffer levels) to the UE AS through operation 520.

The plurality of buffer levels may be included in the AT command, and the number of buffer levels included in the AT command may be limited to a value of the numberOfBufferLevelEntries parameter or less. In other words, the number of buffer levels received by the UE AS simultaneously (e.g., received through one AT command reception) may be limited to the value of the numberOfBufferLevelEntries parameter or less. Accordingly, through operation 525, the UE AS may report the buffer levels to the base station using an RRC message (e.g., MeasurementReportAppLayer), and the number of buffer levels included in one MeasurementReportAppLayer message may be likewise limited to the value of the numberOfBufferLevelEntries parameter or less.

An issue to be addressed in the disclosure is that the period (RVQoE reporting period or RVQoE reporting interval) of reporting the RVQoE by the UE through operation 520 and/or operation 525 may be set by the ran-VisiblePeriodicity parameter, but a method for measuring the plurality of buffer levels (e.g., measurement period or measurement interval) included therein is not defined in the standard. However, if the UE's operation is not defined therefor, the UE may report the buffer level measured at any point in time to the base station, and the base station may not know at what point in time the measured buffer level is. Therefore, a need exists for defining a new buffer level measurement method.

Meanwhile, various embodiments to be described below may be combined within a range in which they do not contradict each other.

As an embodiment of the disclosure, the UE may equally divide the ran-VisablePeriodicity (e.g., $T_{report}$) by the numberOfBufferLevelEntries (e.g., N) value to measure the buffer level at the period of $T_{report}/N$, and accordingly, include N buffer levels measured every $T_{report}$ in the RVQoE report (e.g., RVQoE measurement report of operation 520 and/or 525).

The numberOfBufferLevelEntries (=N) set by the base station refers to the maximum buffer levels that the UE may include when reporting RVQoE (e.g., RVQoE measurement reporting in operation 520 and/or 525) to define (or configure) so that the UE reports a number of buffer levels equal to or smaller than the numberOfBufferLevelEntries (=N) value or less.

When there are many buffers that the UE receives/stores for reproduction, the UE may reproduce the service (e.g., streaming, VR) on time without interruption (or delay), so when a large buffer level value is measured, it may mean that the user's QoE is good. On the other hand, when there are few buffers that the UE receives/stores for reproduction, there is a high possibility that the UE is not to reproduce the service (e.g., streaming, VR) on time, so when a small buffer level value is measured, it may mean that the user's QoE is poor. For the base station, the UE's report of poor QoE may be more useful than good QoE. This is because the base station may perform network resource management or scheduling to solve poor QoE when it detects poor QoE. Therefore, as an embodiment of the disclosure, the UE may equally divide the ran-VisablePeriodicity (e.g., $T_{report}$) by the numberOfBufferLevelEntries (e.g., N) value to measure the buffer level at the $T_{report}$/N period, and accordingly, report only some of the N buffer levels measured every $T_{report}$. For example, the UE may report only the buffer level indicating poor QoE. If the measured buffer level is (equal to or) lower than a specific threshold, the UE may include the corresponding buffer level in the RVQoE measurement report, and if the measured buffer level is (equal to or) higher than a specific threshold, the UE may discard the corresponding buffer level without including it in the RVQoE measurement report. In other words, the UE may select and report only buffer levels having a value lower than the specific threshold among the N buffer levels. This selection operation may be performed by the UE APP, so that, e.g., only the buffer levels selected in operation 520 may be transmitted, and accordingly, only the selected buffer levels may be reported in operation 525. In another embodiment, e.g., through operation 520, the UE APP may transmit all of the N buffer levels to the UE AS, and the UE AS may report only some buffer levels selected through the above selection operation to the base station, e.g., through operation 525. The RVQoE measurement report of operation 520 and/or the RVQoE measurement report of operation 525 may include only one or more selected buffer levels.

However, according to the method in which the UE reports only some selected buffer levels, the base station may not know the number of measurement of the received buffer level, or the time of measurement. For example, the UE may measure eight buffer levels (e.g., in the order of BL1, BL2, BL3, BL4, BL5, BL6, and BL7) and determine to report only three buffer levels (e.g., BL3, BL5, and BL7) lower than the threshold. If the base station receives only the values of BL3, BL5, and BL7 from the UE, the base station may not know the number of each of the three received buffer levels among the eight measurement results or the time of measurement. However, the information may be useful for the base station to calculate or predict the time of observation of poor QoE and accordingly to perform network optimization. For example, the base station may know that the UE has experienced poor QoE in the past when a specific configuration was provided to the UE, and accordingly, release the corresponding configuration. Therefore, as an embodiment of the disclosure, the UE may report, to the base station, the number of measurement for the corresponding buffer level along with the selected buffer level. For example, the UE may indicate 3, 5, and 7, which are the measurement numbers, along with BL3, BL5, and BL7. Alternatively, the UE may report only the measurement numbers of the selected buffer levels for whether they are threshold or less (or more) without reporting the values of the selected buffer levels, thereby reducing signaling overhead. Alternatively, the UE may indicate the time (timestamp) (e.g., absolute time information, relative time information, etc.) when the corresponding buffer level is measured along with the selected buffer level. Alternatively, the UE may reduce signaling overhead according to the report by reporting only the measurement time of the buffer level below (above) the threshold without reporting the selected buffer level value.

The threshold may be a fixed value (e.g., a fixed value defined in the standard). In another embodiment, the threshold may be a variable value set by the base station, and may be defined in an RRC message (e.g., RAN-VisableParameters in AppLayerMeasConfig in the RRC reconfiguration and/or RRC Resume) of operation 510. The UE AS receiving the threshold may transfer it to the UE APP, e.g., through operation 515, and the UE APP may perform the selection operation. In another embodiment, the UE AS receiving the threshold may, rather than transferring it to the UE APP, use the threshold to select the buffer levels received from the UE APP and transfer them to the base station (e.g., operation 525).

As an embodiment of the disclosure, through operation 510, the base station may set a buffer level measurement period (e.g., $T_{meas}$) or N (number of measurements per ran-visiblePeriodicity) to the UE AS. The set value ($T_{meas}$ or N) may be defined in an RRC message (e.g., ran-VisibleParameters parameter in AppLayerMeasConfig IE in RRC Reconfiguration or RRC Resume). The UE AS receiving the set value ($T_{meas}$ or N) may transfer it to the UE APP through operation 515. The UE APP receiving the same may measure the buffer level every $T_{meas}$, or equally divide the ran-VisiblePeriodicity (e.g., $T_{report}$) by the N value and measure the buffer level every $T_{report}$/N, and accordingly include the $T_{report}$/$T_{meas}$ (which may be rounded to an integer) or N buffer levels measured every $T_{report}$ in the RVQoE report (e.g., the RVQoE measurement report of operation 520 and/or operation 525).

If the $T_{report}$/$T_{meas}$ (which may be rounded to an integer) or N is larger than the numberOfBufferLevelEntries value (which is the maximum number of transmittable buffer levels), the UE may perform one of the following methods.

- Method 1: The UE APP may discard some buffer levels (e.g., as many as the excess number). At this time, older measurement values with respect to the measurement time may be information not useful for current network optimization. Thus, the buffer levels may be discarded from the older ones, and the number of the remaining buffer levels may be set to the numberOfBufferLevelEntries or less and they may be transferred to the UE AS through operation 520. Therefore, the UE AS may also report the buffer levels equal to or fewer than the received numberOfBufferLevelEntries to the base station through operation 525.
- Method 2: The UE APP may discard some buffer levels (e.g., as many as the excess number). At this time (as described above), the values indicating good QoE may be information not useful for network optimization to the base station, and thus, the buffer levels may be discarded from ones with larger values (i.e., good QoE), and the number of the remaining buffer levels may be set to the numberOfBufferLevelEntries or less, and they may be transferred to the UE AS through operation 520. Alternatively, buffer level values equal to or larger than a specific threshold set by the network may be discarded, and the number of the remaining buffer levels, as a number equal to or smaller than the numberOfBufferLevelEntries (e.g., nevertheless if exceeding the numberOfBufferLevelEntries, buffer levels may be further discarded in the order from the oldest or in the order from the largest one) may be transmitted to the UE AS through operation 520. Therefore, the UE AS may also report the buffer levels equal to or fewer than the received numberOfBufferLevelEntries to the base station through operation 525.

- Method 3: The UE APP may perform the operation (e.g., operation 520) of transmitting buffer levels equal to or smaller than the numberOfBufferLevel Entries multiple times to transmit all of the measured buffer levels. The UE APP receiving the same may also perform the operation (e.g., operation 525) of transmitting the buffer levels equal to or smaller than the numberOfBufferLevelEntries multiple times.

As an embodiment of the disclosure, restrictions on $T_{meas}$ or N may be defined so that the UE transmits the buffer levels equal to or smaller than the numberOfBufferLevelEntries (e.g., operations 520 and 525). For example, the operation of the base station in which the base station should set the value of N or $T_{meas}$ and numberOfBufferLevelEntries values so that the N or $T_{report}/T_{meas}$ value is smaller than or equal to the numberOfBufferLevelEntries value may be defined.

As an embodiment of the disclosure, when there is no configuration for $T_{meas}$ or N, the UE may measure the buffer levels at a cycle obtained by dividing the ran-VisiblePeriodicity (e.g., $T_{report}$) by the numberOfBufferLevelEntries value, and accordingly, include the numberOfBufferLevelEntries buffer levels measured every $T_{report}$ in the RVQoE report (e.g., the RVQoE measurement report of operation 520 and/or 525).

As an embodiment of the disclosure, event detection-based RVQoE measurement report in the UE APP layer may be defined. (Meanwhile, the disclosure focuses on RVQoE reporting, but this may be applied equally to conventional QoE reporting.) Hereinafter, an example of event-based RVQoE measurement report is described with reference to FIG. 5.

In operation 505, the UE may report to the base station whether to support event-based RVQoE measurement reporting. For example, an indicator as to whether to support event-based RVQoE measurement reporting may be defined in the AppLayerMeasParameters IE in the UE capability information message. When the corresponding indicator is presented or set to true, it may mean that the UE supports event-based RVQoE measurement reporting. When the corresponding indicator is set to absent or false, it may mean that the UE does not support event-based RVQoE measurement reporting.

In operation 510, the base station may provide an event configuration to the UE supporting event-based RVQoE measurement reporting. The event configuration (event configuration information) may include some or all of the following thresholds.

- Threshold for buffer level: A threshold used by the UE APP for detecting an event. If the buffer level measured by the UE APP is smaller than the threshold, the UE may report the corresponding buffer level to the base station.
- Threshold for playout delay for media startup: A threshold used by the UE APP to detect an event. If the playout delay for media startup measured by the UE APP is larger than the threshold, the UE may report the corresponding buffer level to the base station.
- Threshold for other (e.g., as definable later) RVQoE parameters: A threshold used by the UE APP to detect an event. If the RVQoE parameter value measured by the UE APP indicates poor QoE with respect to the threshold, the UE may report the RVQoE parameter value to the base station.

The UE receiving the event configuration information from the base station may perform event-based RVQoE measurement reporting. The event configuration information may be transmitted through an RRC message. For example, the event configuration information may be defined in the AppLayerMeasConfig IE in the RRC reconfiguration or RRC resume message.

As an embodiment of the disclosure, the base station may configure only an event-based RVQoE measurement report to the UE without periodic RVQoE measurement reporting. For example, in the absence of RAN-VisibleParameters-r17 in AppLayerMeasConfig, it may mean that the base station does not configure periodic RVQoE measurement reporting, and the UE may not perform periodic RVQoE measurement reporting. At the same time, when the event configuration information is included in the AppLayerMeasConfig, it may mean that the base station configures only an event-based RVQoE measurement report to the UE, and the UE may perform only event-based RVQoE measurement reporting. If the UE does not periodically perform RVQoE measurement reporting, the UE and the base station may reduce the use of radio resources and save energy by reducing the signaling overhead for the QoE measurement report.

As an embodiment of the disclosure, the base station may configure an event-based RVQoE measurement report together with a periodic RVQoE measurement report to the UE. For example, if RAN-VisibleParameters-r17 is configured in AppLayerMeasConfig, it may mean that the base station configures a periodic RVQoE measurement report, and the UE may perform periodic RVQoE measurement reporting. At the same time, if the event configuration information is included in the AppLayerMeasConfig, it may mean that the base station configures the event-based RVQoE measurement report to the UE, and the UE may perform event-based RVQoE measurement reporting together with periodic RVQoE measurement reporting. In other words, the UE may report the RVQoE measurement result even when detecting a specific event simultaneously with periodically reporting the RVQoE measurement result. If the UE performs periodic RVQoE measurement reporting and event-based RVQoE measurement reporting at the same time, the base station may obtain information about how much the UE's QoE has been changed by comparing the QoE value normally measured by the UE (through periodic RVQoE measurement reporting) and the QoE value measured upon event detection.

In operation 515, the UE AS may transmit the event configuration information received from the base station to the UE APP.

The UE APP may use the received event configuration information for event detection for RVQoE measurement reporting. If the buffer level measured by the UE APP is smaller than the set threshold (at the time of event detection), the UE APP may report the corresponding buffer level to the base station (via the UE AS) as in operations 520 and 525. The UE may immediately report the corresponding buffer level to the base station when an event is detected, and accordingly, the base station may quickly receive the UE's poor QoE (low buffer level) information and optimize the network.

As an embodiment of the disclosure, rather than immediately transmitting, one by one, buffer levels smaller than the threshold set by the UE APP, the corresponding buffer levels may be reported to the base station simultaneously (via the UE APP). In this case, there may be an advantage that a message or AT command need not be sent for each event-detected buffer level. If a plurality of event-detected buffer levels are transmitted simultaneously, time information (e.g., timestamp) about when each buffer level was measured or when the event was detected may also be included in the RVQoE measurement report. As an embodiment of the disclosure, instead of reporting the buffer level, the UE may report whether the event was detected through a 1-bit indicator. The indicator may be defined separately from a detection indicator of another event (e.g., event for playout delay for media startup). In other words, the event detection indicator may be defined for each event. Alternatively, it may be an indicator common to all of the set events. In other words, if at least one of the set events is detected, the UE may set and report the corresponding indicator. The UE may reduce signaling overhead by reporting the 1-bit indicator instead of the buffer level. As an embodiment of the disclosure, the UE may report the number of times of detection of the event to the base station.

As an embodiment of the disclosure, when the UE performs periodic RVQoE measurement reporting, the UE APP may simultaneously (via the UE APP) report, to the base station, the number of buffer levels equal to or smaller than the set numberOfBufferLevel Entries value. For example, if numberOfBufferLevelEntries is set to 8, the UE may simultaneously report the eight buffer levels to the base station. Meanwhile, if the UE is configured with (or performs) periodic RVQoE measurement reporting and event-based RVQoE measurement reporting together, the UE APP may first report the corresponding buffer level and the buffer levels collected before for periodic RVQoE measurement reporting to the base station at the time of event detection. Thereafter, the UE APP may gather again from the next buffer level. For example, if the UE configured with 8 as the numberOfBufferLevelEntries detects (detects an event) that the value measured for the third buffer level, in a state in which the first and second buffer levels have been collected, is smaller than the buffer level threshold, the UE may first transmit the first, second, and third buffer levels and then collect from the fourth buffer level. Alternatively, the UE may first transmit the event-detected buffer level and collect and transmit the other buffer levels. For example, in the above example, when an event is detected at the third buffer level, the UE may first report the third buffer level and collect the first, second, and fourth and subsequent buffer levels which are not event-detected and simultaneously report them.

If the playout delay for media startup measured by the UE APP is larger than the set threshold (upon event detection), the UE APP may report the corresponding playout delay for media startup (via the UE APP) to the base station through operation 525. As an embodiment of the disclosure, instead of reporting the playout delay for media startup, the UE may report whether the event has been detected as a 1-bit indicator. The indicator may be defined separately from another event (e.g., an event for the buffer level) detection indicator. In other words, the event detection indicator may be defined for each event. Alternatively, it may be an indicator common to all of the set events. In other words, if at least one of the set events is detected, the UE may set and report the corresponding indicator. The base station may reduce signaling overhead by reporting the 1-bit indicator instead of the playout delay for media startup. As an embodiment of the disclosure, the UE may report the number of times of detection of the event to the base station.

If the RVQoE index defined in the standard measured by the UE APP is detected as a poor QoE value with respect to the set threshold (at the time of event detection), through operations 520 and 525, the UE APP may report the corresponding RVQoE index value to the base station (via the UE AS). As an embodiment of the disclosure, instead of reporting the corresponding RVQoE index value, the UE may report whether the event has been detected as a 1-bit indicator. The indicator may be defined separately from another event (e.g., an event for the buffer level) detection indicator. In other words, the event detection indicator may be defined for each event. Alternatively, it may be an indicator common to all of the set events. In other words, if at least one of the set events is detected, the UE may set and report the corresponding indicator. The base station may reduce signaling overhead by reporting the 1-bit indicator instead of the RVQoE index value. As an embodiment of the disclosure, the UE may report the number of times of detection of the event to the base station.

As an embodiment of the disclosure, the UE may report PDU session information (e.g., ID(s)) or QoS flow information (e.g., ID(s)) used for the data flow of the APP layer in which the RVQoE index (e.g., buffer level) is measured for network optimization of the base station to the base station through operations 520 and 525.

As an embodiment of the disclosure, one of the following options may be defined in relation to the absence of the ran-VisiblePeriodicity parameter (optional field) in the RAN-VisibleParameters.

Option 1. If the base station sets up the ran-visibleParameters without including ran-VisiblePeriodicity, the UE may use the conventional QoE reporting period contained in the measConfigAppLayerContainer as the RVQoE reporting period value. For example, a field description of the ran-VisiblePeriodicity may be defined as shown in Table 10.

[Table 10]

| ran-VisiblePeriodicity |
| --- |
| The field indicates the periodicity of RAN visible reporting. Value ms120 indicates 120 ms, value ms240 indicates 240 ms and so on. When it is absent, UE application layer shall use reporting periodicity in *measConfigAppLayerContainer* as the periodicity of RAN visible reporting. |

Option 2. It may be defined that the base station should always include the ran-VisiblePeriodicity configuration when setting up the ran-visibleParameters. For example, a field description of the ran-VisiblePeriodicity may be defined as shown in Table 11.

[Table 11]

| ran-VisiblePeriodicity |
| --- |
| The field indicates the periodicity of RAN visible reporting. Value ms120 indicates 120 ms, value ms240 indicates 240 ms and so on. In this release, gNB shall include this field when *ran-VisibleParameters* is set to setup. |

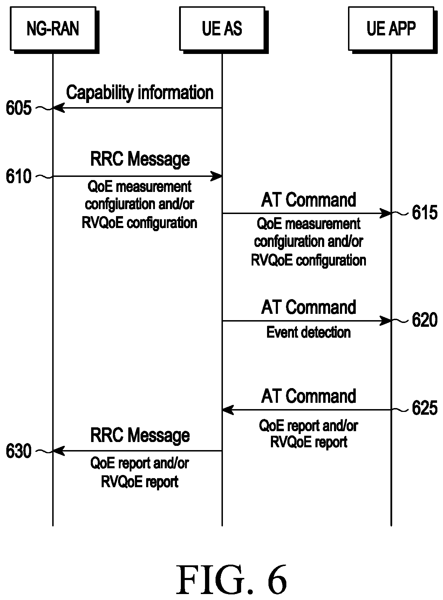

FIG. 6 is a flowchart illustrating a procedure for configuring and reporting an event detection-based RVQoE measurement in a UE APP layer according to an embodiment of the disclosure.

Meanwhile, for convenience of description, the disclosure focuses on RVQoE-related reporting (RVQoE measurement and reporting), but this description may be applied equally to conventional QoE-related reporting (QoE measurement and reporting). The embodiments described above with reference to FIG. 5 may be combined with the embodiments described below with reference to FIG. 6 unless they contradict each other.

In operation 605, the UE (or the UE AS) may report to the base station whether event-based RVQoE measurement reporting is supported. For example, within the AppLayerMeasParameters IE in the UE capability information message, an indicator may be defined as to whether event-based RVQoE measurement reporting is supported. When the corresponding indicator is presented or set to true, it may mean that the UE supports event-based RVQoE measurement reporting. When the corresponding indicator is set to absent or false, it may mean that the UE does not support event-based RVQoE measurement reporting.

In operation 610, the base station may provide an event configuration to the UE supporting event-based RVQoE measurement reporting. The event configuration (event configuration information) may include some or all of the following values (parameters).

- Reference signal received power (RSRP) change threshold (e.g., $Threshold_{RSRP\_delta, 1}$): A threshold used for the UE APP to detect an event (e.g., event 1) and may be a value used to determine the mobility of the UE. This value may be a value used for event detection in the AS layer without being transferred to the APP layer in operation 615. When the change in the RSRP value received by the UE is larger than the threshold (e.g., when the mobility of the UE is large), an event may be detected.

As an embodiment of the disclosure, when the following equation is used (during a specific time threshold (e.g., $Threshold_{time,1}$)) is met, the UE may detect an event (e.g., event 1).

$$(RSRP_{ref}-RSRP_{current}) > Threshold_{RSRP\_delta,1}$$

Here, $RSRP_{current}$ may mean the current RSRP measurement value of the PCell based on synchronization signal block (SSB) of the UE. $RSRP_{Ref}$ is a reference value of the RSRP measurement value of the SSB-based primary cell (PCell) of the UE, and in the following case, it may be set as the $RSRP_{current}$ value.

- When the UE receives setup of the event-based RVQoE measurement configuration information or RVQoE configuration information (e.g., including $Threshold_{RSRP\_delta,1}$), or
- When $(RSRP_{current} - RSRP_{ref}) > 0$, or
- When $(RSRP_{ref}-RSRP_{current}) > Threshold_{RSRP\_delta,2}$ during a specific time threshold (e.g., $Threshold_{time,2}$), or
- When the MAC layer successfully performs random access (e.g., when the UE successfully performs handover) after the UE receives, from the base station, /applies the reconfigurationWithSync (in spCellConfig) including the setup of the event-based RVQoE measurement configuration information or RVQoE configuration information
- RSRP offset (e.g., $Threshold_{RSRP\_delta,2}$) for $RSRP_{ref}$ reset: A threshold used for the UE APP to detect an event (e.g., event 1) and may be a value to reset $RSRP_{ref}$ like in the above embodiment. This value may be a value used for event detection in the AS layer without being transferred to the APP layer in operation 615. As an embodiment, $Threshold_{RSRP\_delta,1}$ and $Threshold_{RSRP\_delta,2}$ may be the same value, and the base station may set them to one value. In this case, according to the above embodiment, the UE may update $RSRP_{Ref}$ with $RSRP_{current}$ at the same time with event detection.
- Time threshold 1 (e.g., $Threshold_{time,1}$): A threshold used for the UE AS to detect an event (e.g., event 1) and may be a value used together with $threshold_{RSRP\_delta,1}$ to determine the mobility of the UE, as in the above embodiment. This value may be a value used for event detection in the AS layer without being transferred to the APP layer in operation 615.
- Time threshold 2 (e.g., $Threshold_{time,2}$): A threshold used for the UE AS to detect an event (e.g., event 1) and may be a value used together with $Threshold_{RSRP\_delta,2}$ to determine the mobility of the UE, as in the above embodiment. As an embodiment, $Threshold_{time,1}$ and $Threshold_{time,2}$ may be the same value, and the base station may set them to one value. This value may be a value used for event detection in the AS layer without being transferred to the APP layer in operation 615.
- RSRP threshold (e.g., $Threshold_{RSRP}$): A threshold used by the UE AS to detect an event (e.g., event 2) and may be used to detect an event where the UE receives a low RSRP (e.g., positioned at the cell edge or in poor coverage), For example, (during $Threshold_{time,3}$. See the description below) if $RSRP_{current}$ of the UE is smaller than $Threshold_{RSRP}$, the UE may detect event 2. This value may be a value used for event detection in the AS layer without being transferred to the APP layer in operation 615.
- Time threshold 3 (e.g., $Threshold_{time,3}$): A threshold used for the UE AS to detect an event (e.g., event 2) and may be a value used together with $Threshold_{RSRP}$ to determine the mobility of the UE, as in the above embodiment. This value may be a value used for event detection in the AS layer without being transferred to the APP layer in operation 615.
- QoE parameter that the UE should report: This may indicate, e.g., a QoE parameter that the base station desires to receive in a report when a specific event occurs, among the QoE parameters measured by the UE APP such as the buffer level or playout delay for media startup of the APP layer. As an embodiment of the disclosure, a different value may be indicated for each event, for the parameter. The UE AS receiving this value may transfers the value to the APP layer in operation 615, so that the UE APP may measure/report RVQoE based on the same.
- Number of RVQoE measurements that the UE should report: This may indicate, e.g., how many times the UE APP should measure/report the buffer level when detecting an event. In an embodiment of the disclosure, a different value may be indicated for each QoE parameter (e.g., buffer level, playout delay for media startup) for the parameter. The UE AS receiving this value may transfers the value to the APP layer in operation 615, so that the UE APP may measure/report RVQoE based on the same.
- RVQoE measurement period that the UE should report: This may indicate the period at which the UE APP should measure the RVQoE when detecting an event. In an embodiment of the disclosure, a different value may be indicated for each QoE parameter (e.g., buffer level, playout delay for media startup) for the parameter. The UE AS receiving this value may transfers the value to the APP layer in operation 615, so that the UE APP may measure/report RVQoE based on the same.
- RVQoE reporting period that the UE should report: This may indicate the period at which the UE APP should report the RVQoE when detecting an event. In an embodiment of the disclosure, a different value may be indicated for each QoE parameter (e.g., buffer level, playout delay for media startup) for the parameter. This value may be longer than the RVQoE measurement period that the UE should report, in which case a plurality of RVQoE measurement results may be sent simultaneously every reporting period when an event is detected. The UE AS receiving this value may transfers the value to the APP layer in operation 615, so that the UE APP may measure/report RVQoE based on the same.

- RVQoE measurement or reporting period that the UE should report: The UE APP may indicate a deadline (period) when the UE APP should measure or report the RVQoE when detecting an event. After the deadline ends, the UE may stop measuring/reporting RVQoE based on the event detection. In an embodiment of the disclosure, a different value may be indicated for each QoE parameter (e.g., buffer level, playout delay for media startup) for the parameter. The UE AS receiving this value may transfers the value to the APP layer in operation 615, so that the UE APP may measure/report RVQoE based on the same.

As an embodiment of the disclosure, an embodiment that uses/applies reference signal received quality (RSRQ) instead of RSRP in the above examples may be used. For example, thresholds and events (e.g., events 3 and 4) for the RSRQ, corresponding to the thresholds ($Threshold_{RSRP}$, $RSRP_{ref}$, $RSRP_{current}$, $Threshold_{RSRP\_delta,1}$, $Threshold_{RSRP\_delta,2}$, $Threshold_{time,1}$, $Threshold_{time,2}$, and $Threshold_{time,3}$) and the events (events 1 and 2) used for the RSRP may be defined. For example, the UE may detect an event of receiving high interference with low RSRQ and perform RVQoE measurement and reporting.

The RSRP (or RSRQ) of the UE may be the RSRP (or RSRQ) of the PCell or serving cell. Alternatively, in the dual connectivity (DC) situation, to measure a change in the RSRP (or RSRQ) of the UE for the master node (MN) or master cell group (MCG), the RSRP (or RSRQ) of the PCell may be used, or to measure a change in the RSRP (or RSRQ) of the UE for the secondary node (SN) or secondary cell group (SCG), the RSRP (or RSRQ) of the PSCell (primary SCG cell) may be used. The RSRP (or RSRQ) may be a measured value for the special cell (SpCell). The RSRP (or RSRQ) may be RSRP/RSRQ (L3 RSRP/RSRQ) in layer 3. The RSRP (or RSRQ) may be an SSB-based RSRP (or RSRQ). Alternatively, CSI-RS-based RSRP (or RSRQ) may be used.

As an embodiment of the disclosure, a new event may be defined by a combination of the events (e.g., events 1, 2, 3, and 4). For example, one event (e.g., event 5) may be detected when a low RSRP is measured and a low RSRQ is measured. For example, one event (e.g., event 6) may be detected when the RSRP varies greatly and a low RSRQ is measured.

The event configuration information may be transmitted through an RRC message. For example, event configuration information may be defined in the AppLayerMeasConfig IE in the RRC Reconfiguration or RRC Resume message.

When detecting an event (e.g., event 1, 2, 3, 4, 5, or 6), the UE AS may transmit information about event detection to the UE APP (620). The transmitted information may be some or all of the following, and may be defined through an AT command.

- Fact of detection of set event: When a plurality of events are defined in the standard and each is indicated by a unique ID (e.g., event 1, 2, 3, or 4), this may indicate the event ID (e.g., 1, 2, 3, or 4) set and detected by the UE APP.
- Event ID: This may indicate the event ID (e.g., 1, 2, 3, or 4) set and detected by the UE AS when a plurality of events are defined, and are indicated by unique IDs, respectively (e.g., events 1, 2, 3, and 4).
- QoE parameter to be reported by the UE, number of RVQoE measurements to be reported by the UE, RVQoE measurement period to be reported by the UE, RVQoE reporting period to be reported by the UE, and/or RVQoE measurement or reporting time of period to be reported by the UE, as defined above: When the UE AS does not transmit the value(s) to the UE APP when receiving the value(s) in operation 610, the UE AS may transmit the value to the UE APP through operation 620 when detecting an event.

As an embodiment of the disclosure, the base station may configure only an event-based RVQoE measurement report to the UE without a periodic RVQoE measurement report (e.g., the periodic RVQoE measurement report described above in FIG. 5). For example, in the absence of RAN-VisibleParameters-r17 in AppLayerMeasConfig, it may mean that the base station does not configure a periodic RVQoE measurement report, and the UE may not perform periodic RVQoE measurement reporting. At the same time, if the event configuration information is included in the AppLayerMeasConfig, it may mean that the base station configures only an event-based RVQoE measurement report to the UE, and the UE may perform only an event-based RVQoE measurement report. If the UE does not periodically perform RVQoE measurement reporting, the UE and the base station may reduce the use of radio resources and save energy by reducing the signaling overhead for the QoE measurement report.

As an embodiment of the disclosure, the base station may configure the event-based RVQoE measurement report, together with the periodic RVQoE measurement report (e.g., the periodic RVQoE measurement report described above in FIG. 5), to the UE. For example, if RAN-VisibleParameters-r17 is configured in AppLayerMeasConfig, it may mean that the base station configures a periodic RVQoE measurement report, and the UE may perform periodic RVQoE measurement reporting. At the same time, if the event configuration information is included in the AppLayerMeasConfig, it may mean that the base station configures the event-based RVQoE measurement report to the UE, and the UE may perform event-based RVQoE measurement reporting together with periodic RVQoE measurement reporting. In other words, the UE may report the RVQoE measurement result even when detecting a specific event simultaneously with periodically reporting the RVQoE measurement result. If the UE performs periodic RVQoE measurement reporting and event-based RVQoE measurement reporting at the same time, the base station may obtain information about how much the UE's QoE has been changed by comparing the QoE value normally measured by the UE (obtainable through periodic RVQoE measurement reporting) and the QoE value (obtainable through the event-based RVQoE measurement reporting) measured upon event detection.

The UE APP may perform RVQoE measurement and report the result to the UE AS using the event detection information received through, e.g., operation 620 and the event configuration information received through, e.g., operation 615.

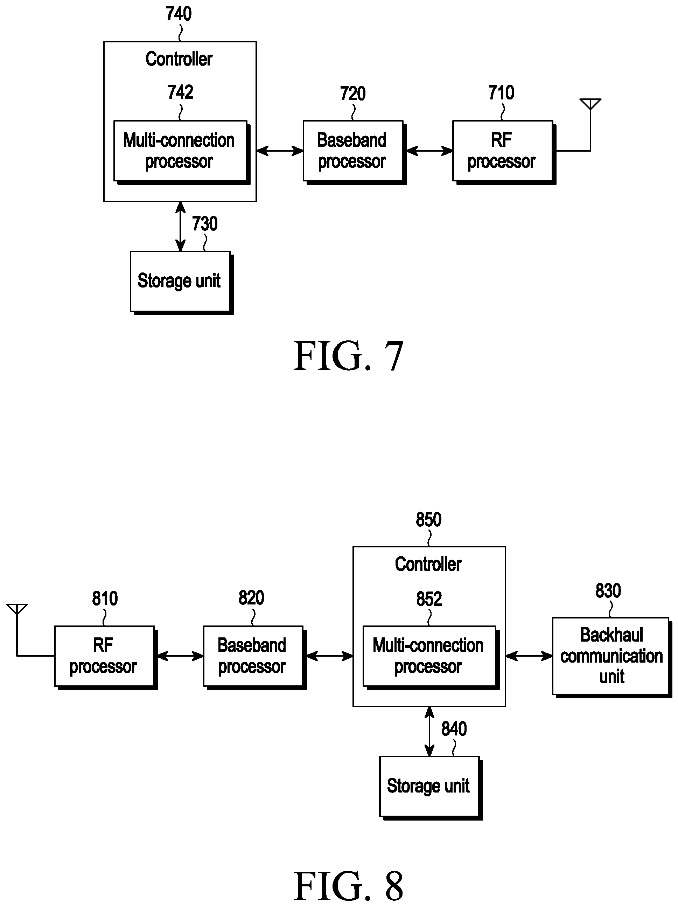

FIG. 7 is a block diagram illustrating a configuration of a UE according to an embodiment.

Referring to the figure, the UE includes a radio frequency (RF) processor 710, a baseband processor 720, a storage unit 730, and a controller 740.

The RF processor 710 performs a function for transmitting and receiving a signal through a radio channel such as band conversion and amplification of a signal. In other words, the RF processor 710 up-converts the baseband signal provided from the baseband processor 720 into an RF band signal, transmits it through the antenna, and down-converts the RF band signal received through the antenna into a baseband signal. For example, the RF processor 710 may include, e.g., a transmission filter, a reception filter, an amplifier, a mixer, an oscillator, a digital-to-analog converter (DAC), and an analog-to-digital converter (ADC). In the figure, only one antenna is shown, but the UE may include a plurality of antennas. The RF processor 710 may include multiple RF chains. Further, the RF processor 710 may perform beamforming. For beamforming, the RF processor 710 may adjust the phase and magnitude of each of the signals transmitted/received through the plurality of antennas or antenna elements. Further, the RF processing unit may perform MIMO and receive several layers upon performing the MIMO operation.

The baseband processor 720 performs the function of conversion between a baseband signal and bit stream according to the system physical layer specifications. For example, upon data transmission, the baseband processor 720 encodes and modulates a transmission bit stream, thereby generating complex symbols. Further, upon data reception, the baseband processor 720 restores the reception bit stream by demodulating and decoding the baseband signal provided from the RF processor 710. For example, in the case of following the orthogonal frequency division multiplexing (OFDM) scheme, upon data transmission, the baseband processor 720 may generate complex symbols by encoding and modulating the transmission bit stream, map the complex symbols to a subcarrier, and then configures OFDM symbols through inverse fast Fourier transform (IFFT) operation and cyclic prefix (CP) insertion. Further, upon data reception, the baseband processor 720 divides the baseband signal provided from the RF processor 710 into OFDM symbol units, restores the signals mapped to the subcarriers through fast Fourier transform (FFT) operation, and then restores the reception bit stream through demodulation and decoding.

The baseband processor 720 and the RF processor 710 may transmit and receive signals as described above. Accordingly, the baseband processor 720 and the RF processor 710 may be referred to as a transmitter, a receiver, a transceiver, or a communication unit. Further, at least one of the baseband processor 720 and the RF processor 710 may include a plurality of communication modules for supporting a plurality of different radio access technologies. Further, at least one of the baseband processor 720 and the RF processor 710 may include different communication modules for processing signals in different frequency bands. For example, the different radio access technologies may include, e.g., wireless LAN (e.g., IEEE 802.11) or cellular network (e.g., LTE). Further, the different frequency bands may include a super-high frequency (SHF) (e.g., 2.NRHz or NRHz) band or millimeter wave (mmWave) (e.g., 60GHz) band.

The storage unit 730 stores a basic program for operating the UE, application programs, configuration information, or other data. In particular, the storage unit 730 may store information related to the second access node performing wireless communication using the second radio access technology. Further, the storage unit 730 provides the stored data at the request of the controller 740.

The controller 740 controls the overall operation of the UE. For example, the controller 740 transmits/receives signals through the baseband processor 720 and the RF processor 710. Further, the controller 740 records and reads data in/from the storage unit 740. To that end, the controller 740 may include at least one processor. For example, the controller 740 may include a communication processor (CP) that performs control for communication and an application processor (AP) that controls an upper layer, such as an application program.

FIG. 8 is a block diagram illustrating a configuration of a base station according to an embodiment.

As shown in the figure, the base station may include an RF processor 810, a baseband processor 820, a backhaul communication unit 830, a storage unit 840, and a controller 850.

The RF processor 810 performs a function for transmitting and receiving a signal through a radio channel such as band conversion and amplification of a signal. In other words, the RF processor 810 up-converts the baseband signal provided from the baseband processor 820 into an RF band signal, transmits it through the antenna, and down-converts the RF band signal received through the antenna into a baseband signal. For example, the RF processor 810 may include a transmission filter, a reception filter, an amplifier, a mixer, an oscillator, a DAC, and an ADC. In the figure, only one antenna is shown, but the first access node may include a plurality of antennas. The RF processor 810 may include multiple RF chains. Further, the RF processor 810 may perform beamforming. For beamforming, the RF processor 810 may adjust the phase and magnitude of each of the signals transmitted/received through the plurality of antennas or antenna elements. The RF processing unit may perform downlink MIMO operation by transmitting one or more layers.

The baseband processor 820 performs the function of conversion between a baseband signal and bit stream according to the physical layer specifications of the first radio access technology. For example, upon data transmission, the baseband processor 820 encodes and modulates a transmission bit stream, thereby generating complex symbols. Further, upon data reception, the baseband processor 820 restores the reception bit stream by demodulating and decoding the baseband signal provided from the RF processor 810. For example, in the case of following the OFDM scheme, upon data transmission, the baseband processor 820 may generate complex symbols by encoding and modulating the transmission bit stream, map the complex symbols to a subcarrier, and then configures OFDM symbols through IFFT operation and CP insertion. Further, upon data reception, the baseband processor 820 divides the baseband signal provided from the RF processor 810 into OFDM symbol units, restores the signals mapped to the subcarriers through the FFT, and then restores the reception bit stream through demodulation and decoding. The baseband processor 820 and the RF processor 810 may transmit and receive signals as described above. Accordingly, the baseband processor 820 and the RF processor 810 may be referred to as a transmitter, a receiver, a transceiver, a communication unit, or a wireless communication unit.

The backhaul communication unit 830 provides an interface for communicating with other nodes in the network. In other words, the backhaul communication unit 830 converts the bit stream transmitted from the main base station to another node, e.g., auxiliary base station or core network, into a physical signal, and converts the physical signal received from the other node into a bit stream.

The storage unit 840 stores a basic program for operating the primary base station, application programs, configuration information, or other data. In particular, the storage unit 840 may store, e.g., information about the bearer allocated to the connected UE and the result of measurement reported from the connected UE. Further, the storage unit 840 may store information that serves as a reference for determining whether to provide multiple connections to the UE or stop. Further, the storage unit 840 provides the stored data at the request of the controller 850.

The controller 850 controls the overall operation of the primary base station. For example, the controller 850 transmits and receives signals through the baseband processor 820 and the RF processor 810 or through the backhaul communication unit 830. Further, the controller 850 records and reads data in/from the storage unit 840. To that end, the controller 850 may include at least one processor.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

**Claims**

1. A method by a user equipment (UE) in a wireless communication system, the method comprising:

   triggering ran-visible quality of experience (RVQoE) measurement reporting based on a buffer level of the UE and a threshold related to the buffer level in an application (APP) layer of the UE;
   transferring an RVQoE measurement report from the APP layer of the UE to an access stratum (AS) layer of the UE; and
   transmitting the RVQoE measurement report to a base station through the AS layer of the UE.

2. The method of claim 1, further comprising receiving, from the base station, configuration information (AppLayer-MeasConfig) including parameters (RAN-VisibleParameters) related to the RVQoE, and for configuring a measurement of the APP layer.

3. The method of claim 2, wherein when the parameters (RAN-VisibleParameters) related to the RVQoE do not include a field (ran-VisiblePeriodicity) for a measurement reporting period for the RVQoE, the period for the RVQoE measurement report is set to be identical to a period included in a measurement configuration container field (measConfigAppLayerContainer) of the APP layer.

4. The method of claim 2, wherein the parameters (RAN-VisibleParameters) related to the RVQoE include at least one of a field (ran-VisiblePeriodicity) for a measurement reporting period for the RVQoE, a field (numberOfBufferLevelEntries) for a maximum number of reportable buffer levels, and a field (reportPlayoutDelayForMediaStartup) for whether to report a playout delay on media startup.

5. The method of claim 2, further comprising:

performing a QoE measurement in the APP layer based on the configuration information (AppLayerMeasConfig) for configuring a measurement of the APP layer; and
generating the RVQoE measurement report based on the QOE measurement.

6. The method of claim 1, further comprising transmitting, to the base station, a UE capability information (UECapabilityInformation) message including information about whether the UE supports the RVQoE measurement for each service.

7. The method of claim 6, wherein the information about whether to support the RVQoE measurement includes at least one of a first parameter indicating whether the UE supports an RVQoE measurement for a streaming service and a second parameter indicating whether the UE supports an RVQoE measurement for a virtual reality (VR) service.

8. A method by a base station in a wireless communication system, the method comprising:

transmitting, to a user equipment (UE), configuration information (AppLayerMeasConfig) including parameters (RAN-VisibleParameters) related to a ran-visible quality of experience (RVQoE) and, for configuring a measurement of an application (APP) layer of the UE; and
if RVQoE measurement reporting is triggered based on a buffer level of the UE and a threshold related to the buffer level in the APP layer of the UE, receiving an RVQoE measurement report through an access stratum (AS) layer of the UE.

9. The method of claim 8, wherein when the parameters (RAN-VisibleParameters) related to the RVQoE do not include a field (ran-VisiblePeriodicity) for a measurement reporting period for the RVQoE, the period for the RVQoE measurement report is set to be identical to a period included in a measurement configuration container field (measConfigAppLayerContainer) of the APP layer.

10. A user equipment (UE) in a wireless communication system, comprising:

a communication unit; and
a controller, wherein the controller is configured to:

trigger ran-visible quality of experience (RVQoE) measurement reporting based on a buffer level of the UE and a threshold related to the buffer level in an application (APP) layer of the UE;
transfer an RVQoE measurement report from the APP layer of the UE to an access stratum (AS) layer of the UE; and
transmit the RVQoE measurement report to a base station through the AS layer of the UE.

11. The UE of claim 10, wherein the controller is configured to receive, from the base station, configuration information (AppLayerMeasConfig) including parameters (RAN-VisibleParameters) related to the RVQoE, and for configuring a measurement of the APP layer.

12. The UE of claim 11, wherein when the parameters (RAN-VisibleParameters) related to the RVQoE do not include a field (ran-VisiblePeriodicity) for a measurement reporting period for the RVQoE, the period for the RVQoE measurement report is set to be identical to a period included in a measurement configuration container field (measConfigAppLayerContainer) of the APP layer.

13. The UE of claim 11, wherein the parameters (RAN-VisibleParameters) related to the RVQoE include at least one of a field (ran-VisiblePeriodicity) for a measurement reporting period for the RVQoE, a field (numberOfBufferLevelEntries) for a maximum number of reportable buffer levels, and a field (reportPlayoutDelayForMediaStartup) for whether to report a playout delay on media startup.

**14.** The UE of claim 11, wherein the controller is configured to:

perform a QoE measurement in the APP layer based on the configuration information (AppLayerMeasConfig) for configuring a measurement of the APP layer; and
generate the RVQoE measurement report based on the QOE measurement.

**15.** A base station in a wireless communication system, comprising:

a communication unit; and
a controller, wherein the controller is configured to:

transmit, to a user equipment (UE), configuration information (AppLayerMeasConfig) including parameters (RAN-VisibleParameters) related to a ran-visible quality of experience (RVQoE) and, for configuring a measurement of an application (APP) layer of the UE; and
if RVQoE measurement reporting is triggered based on a buffer level of the UE and a threshold related to the buffer level in the APP layer of the UE, receive an RVQoE measurement report through an access stratum (AS) layer of the UE.

FIG. 1

205 ~ | NR RRC_CONNECTED |

Resume/Release
210 ~ with suspend

Establishment/
Release ~225

215 ~ | NR RRC_INACTIVE |

220 ~ Release

230 ~ | NR RRC_IDLE |

# FIG. 2

FIG. 3

EP 4 590 015 A1

FIG. 4

EP 4 590 015 A1

```
  NG-RAN              UE AS              UE APP

            Capability information
505 ┌─────◄──────────────────────┐

            RRC Message
510 ┌───────────────────────────►┐
          QoE measurement             AT Command
          confgiuration and/or   ┌─────────────────────►┐ 515
          RVQoE configuration       QoE measurement
                                     confgiuration and/or
                                     RVQoE configuration

                                       AT Command
                                  ┌─────◄──────────────┐ 520
            RRC Message               QoE report and/or
525 ┌─────◄──────────────────────┐    RVQoE report
          QoE report and/or
          RVQoE report
```

# FIG. 5

FIG. 6

740

Controller

742

Multi-connection processor

720

Baseband processor

710

RF processor

730

Storage unit

## FIG. 7

850

Controller

852

Multi-connection processor

810

RF processor

820

Baseband processor

830

Backhaul communication unit

840

Storage unit

## FIG. 8

## INTERNATIONAL SEARCH REPORT

| International application No. |
|---|
| **PCT/KR2023/014551** |

### A. CLASSIFICATION OF SUBJECT MATTER

**H04W 24/08**(2009.01)i; **H04W 24/10**(2009.01)i; **H04L 41/5067**(2022.01)i

According to International Patent Classification (IPC) or to both national classification and IPC

### B. FIELDS SEARCHED

Minimum documentation searched (classification system followed by classification symbols)

H04W 24/08(2009.01); H04W 24/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RVQoE, 버퍼(buffer), 임계(threshold), 측정(measurement)

### C. DOCUMENTS CONSIDERED TO BE RELEVANT

| Category* | Citation of document, with indication, where appropriate, of the relevant passages | Relevant to claim No. |
|---|---|---|
| Y | ERICSSON (MODERATOR). CB: # 2_RVQoE - Summary of email discussion. R3-224985, 3GPP TSG RAN WG3 Meeting #117-e. 25 August 2022.<br>See sections 3.1-3.3. | 1-15 |
| Y | WO 2022-164379 A1 (TELEFONAKTIEBOLAGET LM ERICSSON (PUBL)) 04 August 2022 (2022-08-04)<br>See page 3, line 26 - page 4, line 1; page 7, lines 25-32; page 17, lines 20-33; page 18, line 1; page 23, lines 26-34 and page 37, lines 10-16; and claims 1-27. | 1-15 |
| A | XIAOMI. Discussion on RVQoE value. R3-224760, 3GPP TSG RAN WG3 Meeting #117-e. 09 August 2022.<br>See section 2.2. | 1-15 |
| A | XIAOMI. Discussion on event-triggered RVQoE. R3-224761, 3GPP TSG RAN WG3 Meeting #117-e. 09 August 2022.<br>See section 2.1. | 1-15 |
| A | ERICSSON. Correction for RVQoE. R3-224367, 3GPP TSG RAN WG3 Meeting #117-e. 09 August 2022.<br>See section 21.4. | 1-15 |

☐ Further documents are listed in the continuation of Box C.  ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 December 2023** | **27 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014551**

| Patent document cited in search report | Publication date (day/month/year) | Patent family member(s) | Publication date (day/month/year) |
|---|---|---|---|
| WO 2022-164379 A1 | 04 August 2022 | None | |

Form PCT/ISA/210 (patent family annex) (July 2022)